# EUROPÄISCHE PATENTSCHRIFT

(11) **EP 1 082 581 B1**
(45) Veröffentlichungstag und Bekanntmachung des Hinweises auf die Patenterteilung: **28.07.2004**
(21) Anmeldenummer: 99927803.9
(22) Anmeldetag: 29.05.1999
(51) Int. Cl.: G01B 11/00, G01B 21/04

(54) **ANORDNUNG ZUR MESSUNG VON STRUKTUREN EINES OBJEKTES**
SYSTEM FOR MEASURING STRUCTURES OF AN OBJECT
DISPOSITIF POUR LA MESURE DE STRUCTURES D'UN OBJET

(30) Priorität: 29.05.1998 DE 19824106; 16.10.1998 DE 19847711
(43) Veröffentlichungstag der Anmeldung: 14.03.2001
(73) Patentinhaber: Werth Messtechnik GmbH, 35394 Giessen (DE)
(72) Erfinder: CHRISTOPH, Ralf, D-35641 Schöffengrund (DE)
(74) Vertreter: Stoffregen, Hans-Herbert, Dr. Dipl.-Phys.
(86) Internationale Anmeldenummer: PCT/EP1999/003744
(87) Internationale Veröffentlichungsnummer: WO 1999/063301

(56) Entgegenhaltungen:
- DE-A- 4 327 250
- DE-U- 29 710 242
- US-A- 4 631 834
- US-A- 4 637 119
- US-A- 5 825 666

## Beschreibung

Die Erfindung bezieht sich auf eine Anordnung zur Messung von Strukturen eines Objektes mittels eines einem Koordinatenmessgerät zugeordneten Tasters, welcher ein Tastelement und eine Tasterverlängerung, die als Lichtleiter ausgebildet ist, umfasst, wobei das Koordinatenmessgerät einen Sensor zur optischen Bestimmung des Tastelementes oder zumindest einer dem Tastelement unmittelbar zugeordneten und von der Tasterverlängerung ausgehenden Zielmarke sowie eine Auswerteeinheit umfasst, mit der aus der Position des optischen Sensors zum Koordinatensystem des Koordinatenmessgerätes und der mittels des optischen Sensors unmittelbar gemessenen Position des Tastelementes bzw. der Zielmarke die Struktur des Objektes berechenbar ist.

Zur Messung von Strukturen eines Objektes werden Koordinatenmessgeräte mit elektromechanisch arbeitenden Tastern verwendet, mit denen auf indirektem Wege die Strukturlage bestimmt wird, d. h., die Position des Antastelementes (Kugel) wird über einen Taststift übertragen. Die hierbei auftretenden Verformungen des Taststiftes in Verbindung mit den wirkenden Reibkräften fuhren zur Verfälschung der Messergebnisse. Durch die starke Kraftübertragung kommt es ferner zu Messkräften, die typischerweise größer als 10 mN sind. Die geometrische Ausgestaltung solcher Tastsysteme beschränkt diese auf Kugeldurchmesser größer als 0,3 mm. Die dreidimensionale Messung kleiner Strukturen im Bereich von wenigen Zehntel Millimetern und das Antasten von leicht verformbaren Prüflingen ist somit problematisch bzw. nicht möglich. Bedingt durch die nicht vollständig bekannten Fehlereinflüsse durch Verformung von Taststift und/oder Tastelement sowie die aufgrund z. B. von Stick-Slip-Effekten unbekannten Antastkräfte entstehen Messunsicherheiten, die typischerweise größer als 1 µm sind.

Eine Anordnung der eingangs genannten Art ist dem DE 297 10 242 U1 zu entnehmen. Um mehrere Taststifte nacheinander einsetzen zu können, ist eine Wechseleinrichtung wie Revolver mit mehreren Taststiften vorgesehen.

Ein mechanisch abtastendes Koordinatenmessgerät ist zum Beispiel der DE 43 27 250 A1 zu entnehmen. Dabei kann eine visuelle Kontrolle des mechanischen Antastvorganges mit Hilfe eines Monitors erfolgen, indem der Tastkopf über eine Videokamera beobachtet wird. Gegebenenfalls kann der von einem magnetischen Wechselhalter ausgehende Tastkopf in Form eines sogenannten Schwingquarztasters ausgebildet sein, der bei Berührung mit der Werkstuckoberfläche gedämpft wird. Mittels der Videokamera ist es somit möglich, die Position der Tastkugel relativ zum Werkstück bzw. der dort zu vermessenden Bohrung auf dem Monitor zu verfolgen und den Antastvorgang beim Eintauchen in die Bohrung manuell zu beobachten und zu steuern. Das eigentliche Messen erfolgt wiederum elektromechanisch, so dass die oben genannten Nachteile erhalten bleiben.

Eine optische Beobachtung eines Tastkopfes bei einem Koordinatenmessgerät ist auch der DE 35 02 388 A1 zu entnehmen.

Um die genaue Position der Maschinenachsen eines Koordinatenmessgerätes zu bestimmen, werden nach der DE 43 12 579 A1 zumindest sechs Sensoren an einer Pinole und/oder einem Messkopf angebracht, um den Abstand zu einer Referenzfläche bestimmen zu können. Auf das Antasten der Objektgeometrien wird hier nicht weiter eingegangen, sondern ein berührungsloses Verfahren als Ersatz für klassische inkrementelle Wegmesssysteme beschrieben.

In der US 4,972,597 wird ein Koordinatenmessgerät mit einem Taster beschrieben, dessen Tasterverlängerung mittels einer Feder in ihrer Position vorgespannt ist. Ein in einem Gehäuse verlaufender Abschnitt der Tasterverlängerung weist zwei zueinander beabstandete Licht emittierende Elemente auf, um mittels eines Sensorelementes die Position der Tasterverlängerung und damit indirekt die eines am äußeren Ende der Tasterverlängerung angeordneten Tastelementes zu bestimmen.

Die optische Sensorik ersetzt hier ebenfalls die klassischen Wegmesssysteme von elektromechanischen Tastsystemen. Der eigentliche Antastvorgang erfolgt wiederum via Kraftübertragung vom Tastelement zum Taststift über Federelemente zum Sensor. Die oben genannten Probleme mit Durchbiegung und Antastkraft bleiben wiederum erhalten. Es handelt sich um ein indirektes Verfahren.

Um große Körper wie Flugzeugteile zu vermessen, sind Taststifte mit Lichtquellen bzw. reflektierenden Zielmarken bekannt, deren Positionen optisch erfasst werden (DE 36 29 689 A1, DE 26 05 772 A1, DE 40 02 043 C2). Die Taster selbst werden von Hand oder mittels eines Roboters entlang der Oberfläche des zu messenden Körpers bewegt.

Bei diesem Verfahren wird die Position des Tastelementes stereoskopisch durch Triangulation oder ähnliches in seiner Lage stimmt. Die Auflösung des Gesamtmesssystems ist somit direkt durch die Sensorauflösung begrenzt. Der Einsatz solcher Systeme kann somit nur bei relativ geringen Anforderungen an das Verhältnis zwischen Messbereich und Genauigkeit in Frage kommen. Praktisch ist er auf das Messen großer Teile beschränkt.

Auch ist es bekannt, mittels eines Mikroskops die Position des Tastelementes anzuvisieren. Hierbei wird im Durchlichtverfahren gearbeitet, so dass allein Strukturen, wie durchgehende Bohrungen oder ähnliches bezüglich der Durchmessermaße gemessen werden können. Aufgrund der visuellen Auswertung im Mikroskop und der getrennten Anordnung von Tastelement und Beobachtungsoptik ist das Messen komplexerer Strukturen (Abstände von komplexen Geometrien, Winkel etc.) sowie ein automatisches Messen nicht möglich. Die Störanfälligkeit ist hierdurch bedingt ebenfalls sehr hoch und führt dazu, dass derartige Systeme nicht angeboten werden.

Der vorliegenden Erfindung liegt das Problem zugrunde, eine Vorrichtung der zuvor genannten Art so weiterzubilden, dass beliebige Strukturen mit einer hohen Messgenauigkeit bestimmt werden können, wobei eine problemlose Justierung sowie ein schnelles Austauschen des Tasters möglich sein soll.

Erfindungsgemäß wird das Problem im Wesentlichen dadurch gelöst, dass der Sensor mit dem Taster eine gemeinsam verstellbare Einheit bildet, dass der Taster über eine optomechanische Schnittstelle mit einer Justiereinrichtung einer Wechselhalterung verbunden ist, wobei die Justiereinrichtung zu oder mit der Wechselhalterung rotatorisch und translatorisch verstellbar ist, dass der Taster austauschbar mit der optomechanischen Schnittstelle verbunden ist und dass die Wechselhalterung magnetisch und/oder mechanisch mit einer Halterung verbunden ist, die mit dem Sensor verbunden ist.

Durch die erfindungsgemäße Lehre wird die durch die Berührung des Objekts bedingte Position des Tastelelementes optisch bestimmt, um unmittelbar aus der Position des Tastelementes selbst bzw. einer Zielmarke den Verlauf einer Struktur zu messen. Dabei kann die Auslenkung des Tastelementes durch Verschiebung des Bildes auf einem Sensorfeld eines elektronischen Bildverarbeitungssystems mit elektronischer Kamera erfasst werden. Auch besteht die Möglichkeit, die Auslenkung des Tastelementes durch Auswerten einer Kontrastfunktion des Bildes mittels eines elektronischen Bildverarbeitungssystems zu bestimmen. Eine weitere Möglichkeit zur Bestimmung der Auslenkung besteht darin, dies aus einer Größenänderung des Bildes einer Zielmarke zu bestimmen, aus dem der strahlenoptische Zusammenhang zwischen Objekt-Abstand und Vergrößerung resultiert. Nach einer weiteren Möglichkeit kann die Auslenkung des Tastelementes durch scheinbare Größenänderung einer Zielmarke ermittelt werden, die aus dem Kontrastverlust durch Defokussierung resultiert. Dabei wird grundsätzlich die Auslenkung senkrecht zur optischen Achse der elektronischen Kamera bestimmt.

Um das Tastelement bzw. die diesem zugeordnete Zielmarke problemlos zu positionieren bzw. einen Austausch von Tastern vornehmen zu können, ohne dass ein unerwünschter Zeitverlust erfolgt, ist vorgesehen, dass der Taster über eine optomechanische Schnittstelle mit einer Justiereinrichtung der Wechselhalterung verbunden ist, wobei die Justiereinrichtung selbst zumindest um drei Translations- und zwei Rotationsachsen drehbar ist. Auf diese Weise ist ein schnelles Justieren des Tasters möglich, so dass nur kurze Kalibrierzeiten erforderlich sind. Durch die optomechanische Schnittstelle bzw. die des Wechselhalters ist ein Austausch des Tasters in kurzer Zeit möglich.

Die optomechanische Schnittstelle kann nach einer Weiterbildung der Erfindung eine einen Zylinder aufnehmende Hülse umfassen, wobei der Taster bzw. dessen Tasterverlängerung von dem Zylinder aufgenommen ist. Dabei verläuft der Taster bzw. die Tasterverlängerung zumindest fluchtend zur zur optischen Achse fernliegenden Stirnfläche des Zylinders bzw. durchsetzt diese.

Der Stirnfläche zugeordnet ist eine Lichtquelle wie LED, die über die Wechselhalterung durchsetzende elektrische Anschlüsse mit elektrischer Energie versorgt wird.

Die Erfindung wird nachstehend anhand eines der Zeichnung zu entnehmenden bevorzugten Ausführungsbeispiels näher erläutert.

Es zeigen:

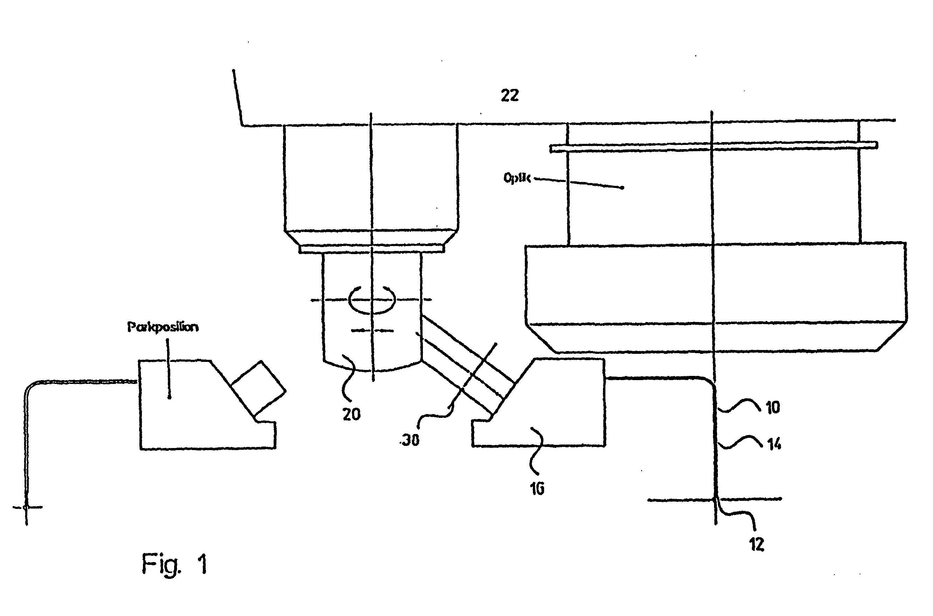

- Fig. 1: eine Prinzipdarstellung einer Anordnung zur Messung von Strukturen eines Objektes und

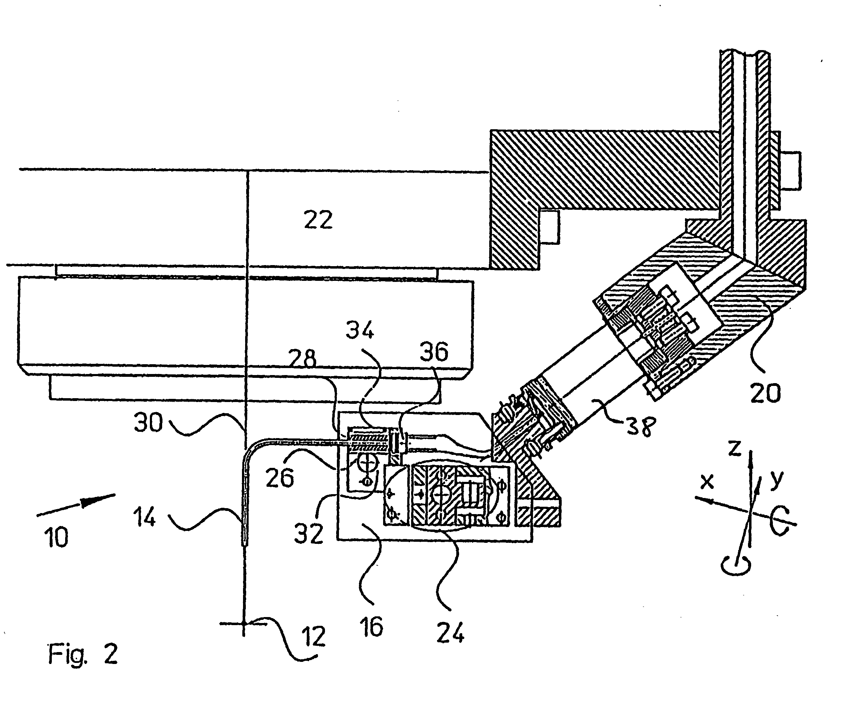

- Fig. 2: die Anordnung gemäß Fig. 1, teilweise im Schnittpunkt.

In den Figuren ist rein prinzipiell eine Ausführungsform einer Anordnung zur Messung von Strukturen eines Objektes mittels eines einem Koordinatenmessgerät zugeordneten Tasters 10 dargestellt. Der Taster 10 umfasst ein Tastelement 12 oder eine diesem zugeordnete Zielmarke, die von einer das Tastelement 12 endseitig aufnehmenden Tasterverlängerung 14 ausgeht, die ihrerseits als Lichtleiter ausgebildet sein kann. Somit kann es sich bei dem Taster 10 um einen faseroptischen Taster handeln. Unabhängig hiervon weist die Tasterverlängerung zumindest einen biegeelastischen Abschnitt auf oder ist biegeelastisch ausgebildet.

Der Taster 10 geht von einer Wechselhalterung 16 aus, die ihrerseits magnetisch mit einer Halterung 20 verbunden ist, die zusammen mit dem Koordinatenmessgerät 22 und mit dem in diesem vorhandenen optischen Sensor als Einheit verstellbar ist.

Die Wechselhalterung 16 selbst umfasst eine Justiereinrichtung 24, von der aus über eine optomechanische Schnittstelle 26 der Taster 10 ausgeht. Die optomechanische Schnittstelle 26 umfasst einen Zylinder 28, der von der Tasterverlängerung 14 bis zu dessen zur optischen Achse 30 fernliegenden Stimfläche 32 durchsetzt wird. Der Zylinder 28 wird seinerseits von einer Hülse 34 aufgenommen und in dieser fixiert. Gegenüberliegend zur Stirnfläche 32 ist eine Lichtquelle in Form einer LED 36 angeordnet, um die Tasterverlängerung 14 in Form eines Lichtleiters mit Licht zu beaufschlagen, welches zum Tastelement 12 gelangt, um sodann das Tastelement 12 durch die vorhandene Optik des Koordinatenmessgerätes 22 oder einem entsprechenden Sensor zu beobachten.

Die Justiereinrichtung 24 ist erfindungsgemäß um drei Translationsachsen xyz und zwei Rotationsachsen, im Ausführungsbeispiel um die Achsen x und y, drehbar. Hierdurch ergibt sich die Möglichkeit, den Taster 10 überaus präzise justieren zu können. Durch die optomechanische Schnittstelle 26 ergibt sich zudem der Vorteil, dass problemlos ein Taster ausgetauscht bzw. erneuert werden kann.

Die Wechselschnittstelle 38 zwischen Wechselhalter 16 und Halterung 20 wird von den erforderlichen Versorgungsleitungen durchsetzt, um z. B. die Lichtquelle 36 mit Strom zu versorgen.

## Patentansprüche

1. Anordnung zur Messung von Strukturen eines Objektes mittels eines einem Koordinatenmessgerät (22) zugeordneten Tasters (10), welcher ein Tastelement (12) und eine Tasterverlängerung (14), die als Lichtleiter ausgebildet ist, umfasst, wobei das Koordinatenmessgerät einen Sensor zur optischen Bestimmung des Tastelementes oder zumindest einer dem Tastelement unmittelbar zugeordneten und von der Tasterverlängerung ausgehenden Zielmarke sowie eine Auswerteeinheit umfasst, mit der aus der Position des optischen Sensors zum Koordinatensystem des Koordinatenmessgerätes und der mittels des optischen Sensors unmittelbar gemessenen Position des Tastelementes bzw. der Zielmarke die Struktur des Objektes berechenbar ist,
**dadurch gekennzeichnet,**
**dass** der Sensor mit dem Taster (10) eine gemeinsam verstellbare Einheit bildet, dass der Taster über eine optomechanische Schnittstelle (26) mit einer Justiereinrichtung (24) einer Wechselhalterung (16) verbunden ist, wobei die Justiereinrichtung zu oder mit der Wechselhalterung rotatorisch und translatorisch verstellbar ist, dass der Taster austauschbar mit der optomechanischen Schnittstelle verbunden ist und dass die Wechselhalterung magnetisch und/oder mechanisch mit einer Halterung (20) verbunden ist, die mit dem Sensor verbunden ist.

2. Anordnung nach Anspruch 1,
**dadurch gekennzeichnet,**
**dass** die Justiereinrichtung (24) um drei Translations- und zumindest zwei Rotationsachsen (x,y,z) verstellbar ist.

3. Anordnung nach Anspruch 1 oder 2,
**dadurch gekennzeichnet,**
**dass** die optomechanische Schnittstelle einen Zylinder (28) mit diesen aufnehmender Hülse (34) umfasst, wobei die Tastesverlängerung (14) von dem Zylinder austauschbar aufgenommen ist.

4. Anordnung nach zumindest einem der vorhergehenden Ansprüche,
**dadurch gekennzeichnet,**
**dass** die Tasterverlängerung (14) fluchtend zur rückseitigen Stirnfläche (32) des Zylinders (28) endet oder diese durchsetzt.

5. Anordnung nach zumindest einem der vorhergehenden Ansprüche,
**dadurch gekennzeichnet,**
**dass** der Stirnfläche (32) des Zylinders (28) gegenüberliegend eine Lichtquelle (36) wie z.B. ein LED zugeordnet ist.

6. Anordnung nach zumindest einem der vorhergehenden Ansprüche,
**dadurch gekennzeichnet,**
**dass** der Zylinder (28) in der Hülse (34) verrastbar ist.

7. Anordnung nach zumindest einem der vorhergehenden Ansprüche,
**dadurch gekennzeichnet,**
**dass** die Wechselhalterung (16) mechanisch formschlüssig und/oder mechanisch kraftschlüssig mit der Halterung (20) verbunden ist.

## Claims

1. Arrangement for measuring structures of an object by means of a stylus (10) assigned to a coordinate measuring device (22), said stylus comprising a stylus element (12) and a stylus prolongation (14) in the form of an optical waveguide, wherein the coordinate measuring device comprises a sensor for the optical determination of the stylus element or at least a target marker assigned directly to the stylus element and originating from the stylus prolongation, and an evaluation unit, with which the structure of the object can be calculated from the position of the optical sensor in relation to the coordinate system of the coordinate measuring device and the position of the stylus element or the target marker, measured directly by means of the optical sensor,
**characterized in**
**that** the sensor forms a jointly adjustable unit with the stylus (10), that the stylus is connected via an optomechanical interface (26) to an adjustment device (24) of an interchangeable support (16), wherein the adjustment device can be adjusted in relation to or with the interchangeable support, rotationally and linearly, that the stylus is connected to the optomechanical interface such that the stylus can be exchanged and that the interchangeable support is connected magnetically and/or mechanically to a support (20) that is connected to the sensor.

2. Arrangement according to claim 1,
**characterized in**
**that** the adjustment device (24) is adjustable around three linear and at least two rotational axes (x, y, z).

3. Arrangement according to claim 1 or 2,
**characterized in**
**that** the optomechanical interface comprises a cylinder (28) held inside a sleeve (34), wherein the stylus prolongation (14) is taken up by the cylinder such that it is exchangeable.

4. Arrangement according to at least one of the preceding claims,
**characterized in**
**that** the stylus prolongation (14) ends in alignment with the rear end face (32) of the cylinder (28) or penetrates said end face.

5. Arrangement according to at least one of the preceding claims,
**characterized in**
**that** a light source (36), such as LED, is positioned opposite the end surface (32) of the cylinder (28).

6. Arrangement according to at least one of the preceding claims,
**characterized in**
**that** the cylinder (28) is lockable into the sleeve (34).

7. Arrangement according to at least one of the preceding claims,
**characterized in**
**that** the interchangeable support (16) is attached to the support (20) in a mechanically interlocking and/or mechanically actuated connection.

## Revendications

1. Dispositif pour mesurer des structures d'un objet au moyen d'un palpeur (10) associé à un appareil de mesure de coordonnées (22) qui comprend un élément de palpage (12) et un prolongateur de palpeur (14) constitué par un conducteur de lumière, l'appareil de mesure de coordonnées comprenant un capteur pour définir optiquement l'élément de palpage, ou au moins un repère de visée directement associé à celui-ci et issu du prolongateur de palpeur, ainsi qu'une unité d'exploitation qui, à partir de la position du capteur optique par rapport au système de coordonnées de l'appareil qui mesure celles-ci, ainsi que de la position de l'élément de palpage ou du repère de visée mesurée directement par le capteur optique, peut calculer la structure de l'objet,
**caractérisé en ce que**
le capteur forme avec le palpeur (10) une unité commune mobile, et le capteur est relié par une interface optomécanique à un dispositif d'ajustage (24) d'un support interchangeable (16), qui peut se déplacer par rapport à ce support ou avec lui par rotation et translation, le palpeur étant relié avec possibilité d'échange à l'interface optomécanique, tandis que le support amovible est relié magnétiquement et/ou mécaniquement à un support (20) qui est relié au capteur.

2. Dispositif selon la revendication 1,
**caractérisé en ce que**
le dispositif d'ajustage (24) peut se déplacer selon trois axes de translation (x, y, z,) et autour d'au moins deux axes de rotation.

3. Dispositif selon la revendication 1 ou 2,
**caractérisé en ce que**
l'interface optomécanique comprend un vérin (28) et une douille (34) dans lequel celui-ci est logé, le prolongateur de palpeur (14) étant monté de manière amovible sur le vérin.

4. Dispositif selon une des revendications précédentes,
**caractérisé en ce que**
le prolongateur de palpeur (14) se termine à fleur de la face frontale arrière (23) du vérin (28) ou traverse cette face.

5. Dispositif selon une des revendications précédentes,
**caractérisé en ce que**
la face frontale (32) du vérin (28) est associée à une source lumineuse (36) située en face, par exemple une LED.

6. Dispositif selon au moins une des revendications précédentes,
**caractérisé en ce que**
le vérin (28) peut être immobilisé dans la douille (34).

7. Dispositif selon au moins une des revendications précédentes,
**caractérisé en ce que**
le support interchangeable (16) est relié mécaniquement avec verrouillage par combinaison de formes et/ou à force au support (20).
